# EUROPEAN PATENT APPLICATION

(11) **EP 2 280 188 A2**
(43) Date of publication of application: **02.02.2011**
(21) Application number: 10171346.9
(22) Date of filing: 30.07.2010
(51) Int. Cl.: F16H 3/66

(54) **Automatic transmission**

(30) Priority: 31.07.2009 JP 2009178803
(71) Applicant: JATCO Ltd, Fuji-shi, Shizuoka 417-8585 (JP)
(72) Inventor: Yamamoto, Akihiro, Fuji-shi Shizuoka 417-8585 (JP); Aota, Kazuaki, Fuji-shi Shizuoka 417-8585 (JP); Inuta, Yukiyoshi, Fuji-shi Shizuoka 417-8585 (JP); Kobayashi, Naoki, Fuji-shi Shizuoka 417-8585 (JP); Ilzuka, Kouichi, Fuji-shi Shizuoka 417-8585 (JP); Okuda, Takayuki, Fuji-shi Shizuoka 417-8585 (JP); Tenberge, Peter, 09123, Chemnitz (DE); Müller, Jörg, 09113, Chemnitz (DE); Resch, Rico, 01723, Wilsdruff (DE)
(74) Representative: Grünecker, Kinkeldey, Stockmair & Schwanhäusser Anwaltssozietät

(57) **Abstract**

An automatic transmission includes first to third single-pinion planetary gearsets. The second ring gear and third sun gear are coupled to the first carrier and first ring gear respectively to constitute first and second rotor units. Input and output shafts are coupled to the second sun gear and third ring gear respectively. A first clutch selectively couples the first sun gear to the first carrier. A second clutch selectively couples the second sun gear to the third carrier. A third clutch selectively couples the second carrier to the second rotor unit. A fourth clutch selectively couples the second carrier to the third carrier. A first brake selectively holds the first sun gear stationary. A second brake selectively holds the third carrier stationary. At least eight forward gear ratios and one reverse gear ratio are obtained by simultaneous application of three of the clutches and brakes.

## Description

### BACKGROUND OF THE INVENTION

The present invention relates to multiple-speed automatic transmissions for motor vehicles.

There is demand for multiplication of gear ratios, and widening of overall gear ratio coverage in motor vehicles. Japanese Patent Application Publication No. 2001-182785 discloses an eight-speed automatic transmission which is composed of one double-pinion planetary gearset, one Ravigneaux planetary gearset, four clutches, and two brakes.

### SUMMARY OF THE INVENTION

The automatic transmission according to Japanese Patent Application Publication No. 2001-182785 can be regarded as having two double-pinion planetary gearsets and one single-pinion planetary gearset, because the Ravigneaux planetary gearset can be regarded as having one double-pinion planetary gearset and one single-pinion planetary gearset. This structure can cause at least the following three adverse effects: (1) The number of gear meshes in torque flow is large, adversely affecting the gear efficiency and gear noise level; (2) The diameters of planet pinions are small, adversely affecting the durability and reliability of the planet pinions; and (3) The automatic transmission is composed of a large number of parts, adversely affecting the manufacturing cost.

In the automatic transmission according to Japanese Patent Application Publication No. 2001-182785, each gear ratio is obtained by simultaneous application of two of the six coupling members (four clutches and two brakes). Accordingly, in this automatic transmission, four of the coupling members are released constantly, in each of which a pair of engaging elements are rotating relative to each other. Relative rotation between the engaging elements in each released coupling member can cause a friction loss, and thereby adversely affect the power transfer efficiency.

In cases where a multiple-plate clutch or brake is used as a coupling member in an automatic transmission as commonly used, the clearance between each driving plate and an adjacent driven plate in the coupling member is relatively small, when the coupling member is released so that the driving plate is rotating relative to the driven plate. This can cause dragging between the driving plate and the driven plate. The resistance due to such dragging tends to increase, as the number of plates of a coupling member increases, and as the relative rotational speed between the plates increases.

In view of the foregoing, it is desirable to provide an automatic transmission which is capable of providing at least eight forward gear ratios, with improvement in the gear efficiency, gear noise level, durability and reliability, and manufacturing cost, and also with improvement in the power transfer efficiency.

According to one aspect of the present invention, an automatic transmission comprises: a first planetary gearset including: a first sun gear; a first ring gear; and a first planet-pinion carrier arranged to carry a first planet pinion in mesh with the first sun gear and the first ring gear; a second planetary gearset including: a second sun gear; a second ring gear, wherein the second ring gear is constantly coupled to the first planet-pinion carrier so as to constitute a first rotor unit; and a second planet-pinion carrier arranged to carry a second planet pinion in mesh with the second sun gear and the second ring gear; a third planetary gearset including: a third sun gear, wherein the third sun gear is constantly coupled to the first ring gear so as to constitute a second rotor unit; a third ring gear; and a third planet-pinion carrier arranged to carry a third planet pinion in mesh with the third sun gear and the third ring gear; an input shaft constantly coupled to the second sun gear; an output shaft constantly coupled to the third ring gear; a first coupling member arranged to be selectively applied to couple two of the first sun gear, first ring gear, and first planet-pinion carrier to one another; a second coupling member arranged to be selectively applied to couple the second sun gear to the third planet-pinion carrier; a third coupling member arranged to be selectively applied to couple the second planet-pinion carrier to the second rotor unit; a fourth coupling member arranged to be selectively applied to couple the second planet-pinion carrier to the third planet-pinion carrier; a fifth coupling member arranged to be selectively applied to hold the first sun gear stationary; and a sixth coupling member arranged to be selectively applied to hold the third planet-pinion carrier stationary, wherein at least first to eighth forward gear ratios and one reverse gear ratio are obtained between the input shaft and the output shaft by simultaneous application of three of the first to sixth coupling members.

### BRIEF DESCRIPTION OF THE DRAWINGS

FIG. 1 is a skeleton diagram showing an automatic transmission according to a first embodiment of the present invention.

FIG. 2 is a table showing which three of six coupling members are selectively applied to obtain respective ones of first to eighth forward gear ratios and one reverse gear ratio in the automatic transmission according to the first embodiment.

FIG. 3 is a table showing the number of gear meshes in torque flow in each forward gear ratio in the automatic transmission according to the first embodiment.

FIG. 4 is a diagram showing how the first gear ratio is obtained in the automatic transmission according to the first embodiment.

FIG. 5 is a diagram showing how the second gear ratio is obtained in the automatic transmission according to the first embodiment.

FIG. 6 is a diagram showing how the third gear ratio is obtained in the automatic transmission according to the first embodiment.

FIG. 7 is a diagram showing how the fourth gear ratio is obtained in the automatic transmission according to the first embodiment.

FIG. 8 is a diagram showing how the fifth gear ratio is obtained in the automatic transmission according to the first embodiment.

FIG. 9 is a diagram showing how the sixth gear ratio is obtained in the automatic transmission according to the first embodiment.

FIG. 10 is a diagram showing how the seventh gear ratio is obtained in the automatic transmission according to the first embodiment.

FIG. 11 is a diagram showing how the eighth gear ratio is obtained in the automatic transmission according to the first embodiment.

FIG. 12 is a diagram showing how the reverse gear ratio is obtained in the automatic transmission according to the first embodiment.

FIG. 13 is a skeleton diagram showing an automatic transmission according to a reference example.

FIG. 14 is a table showing which two of six coupling members are selectively applied to obtain respective ones of eight forward gear ratios and two reverse gear ratios in the automatic transmission shown in FIG. 13.

FIG. 15 is a table showing the number of gear meshes in torque flow in each forward gear ratio in the automatic transmission shown in FIG. 13.

FIG. 16 is a skeleton diagram showing an automatic transmission according to a second embodiment of the present invention.

FIG. 17 is a skeleton diagram showing an automatic transmission according to a third embodiment of the present invention.

### DETAILED DESCRIPTION OF THE INVENTION

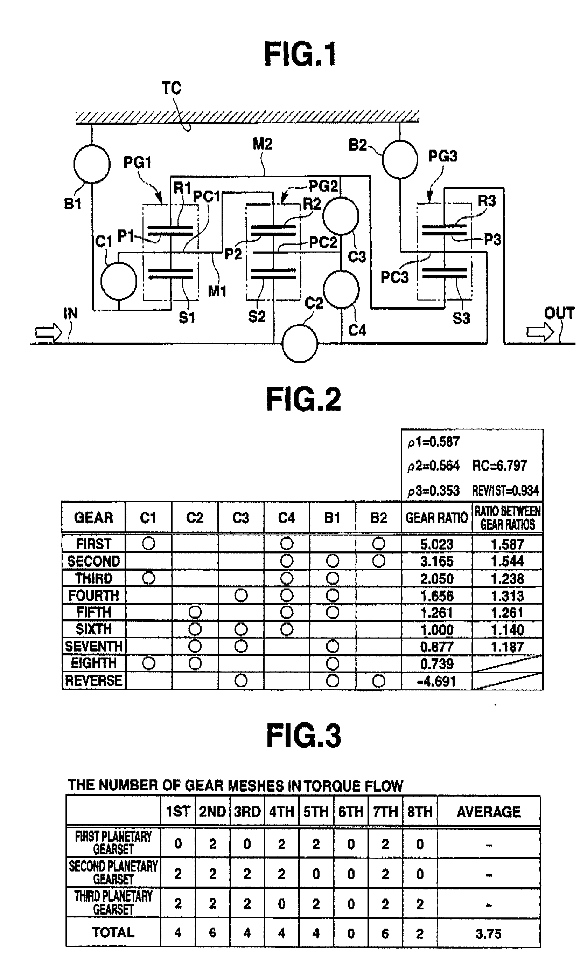

<First Embodiment> FIG. 1 shows an automatic transmission according to a first embodiment of the present invention. As shown in FIG. 1, the automatic transmission includes a first planetary gearset PG1, a second planetary gearset PG2, a third planetary gearset PG3, an input shaft "IN", an output shaft "OUT", a first rotor M1, a second rotor M2, a first clutch C1 as a first coupling member or friction member, a second clutch C2 as a second coupling member or friction member, a third clutch C3 as a third coupling member or friction member, a fourth clutch C4 as a fourth coupling member or friction member, a first brake B1 as a fifth coupling member or friction member, a second brake B2 as a sixth coupling member or friction member, and a transmission case "TC".

First planetary gearset PG1 is of a single pinion type, including a first sun gear S1, a first ring gear R1, and a first planet-pinion carrier PC1 that is arranged to carry a first planet pinion set P1 in simultaneous mesh with first sun gear S1 and first ring gear R1. Second planetary gearset PG2 is of a single pinion type, including a second sun gear 52, a second ring gear R2, and a second planet-pinion carrier PC2 that is arranged to carry a second planet pinion set P2 in simultaneous mesh with second sun gear S2 and second ring gear R2. Third planetary gearset PG3 is of a single pinion type, including a third sun gear S3, a third ring gear R3, and a third planet-pinion carrier PC3 that is arranged to carry a third planet pinion set P3 in simultaneous mesh with third sun gear S3 and third ring gear R3.

Input shaft IN is adapted to be connected to a driving source such as an internal combustion engine, so that a driving torque is inputted through a torque converter, etc. to input shaft IN. Input shaft IN is fixed or constantly coupled to second sun gear S2. On the other hand, output shaft OUT is adapted to be connected to driving wheels, so that a shifted driving torque is outputted through a propeller shaft, a final gear, etc. to the driving wheels. Output shaft OUT is fixed or constantly coupled to third ring gear R3.

First rotor M1 fixes or constantly couples first planet-pinion carrier PC1 to second ring gear R2 with no coupling member therebetween, where first rotor M1, first planet-pinion carrier PC1, and second ring gear R2 constitute a first rotor unit. On the other hand, second rotor M2 fixes or constantly couples first ring gear R1 to third sun gear S3 with no coupling member therebetween, where second rotor M2, first ring gear R1, and third sun gear S3 constitute a second rotor unit.

First clutch C1 is arranged to be selectively applied to couple first sun gear S1 to first planet-pinion carrier PC1, namely, hold first sun gear S1 with respect to first planet-pinion carrier PC1. Second clutch C2 is arranged to be selectively applied to couple second sun gear S2 to third planet-pinion carrier PC3, namely, hold second sun gear S2 with respect to third planet-pinion carrier PC3. Third clutch C3 is arranged to be selectively applied to couple second planet-pinion carrier PC2 to second rotor M2, namely, hold second planet-pinion carrier PC2 with respect to second rotor M2. Fourth clutch C4 is arranged to be selectively applied to couple second planet-pinion carrier PC2 to third planet-pinion carrier PC3, namely, hold second planet-pinion carrier PC2 with respect to third planet-pinion carrier PC3. First brake B1 is arranged to be selectively applied to couple first sun gear S1 to transmission case TC, namely, hold first sun gear S1 stationary. Second brake B2 is arranged to be selectively applied to couple third planet-pinion carrier PC3 to transmission case TC, namely, hold third planet-pinion carrier PC3 stationary.

First planetary gearset PG1, second planetary gearset PG2, and third planetary gearset PG3 are arranged in this order from an input side to an output side in an axial direction of the automatic transmission, wherein input shaft IN is arranged at the input side, and output shaft OUT is arranged at the output side.

FIG. 2 shows which three of the six coupling members are selectively applied to obtain respective ones of first to eighth gear ratios and one reverse gear ratio in the automatic transmission according to the first embodiment. FIG. 3 shows the number of gear meshes in torque flow in each forward gear ratio in the automatic transmission according to the first embodiment. The number of gear meshes in torque flow is defined as the number of places in torque flow where torque is transmitted between gears turning in mesh with each other.

The first gear ratio is obtained by simultaneous application of first clutch C1, fourth clutch C4 and second brake B2, as shown in FIG. 2. As shown in FIG. 3, in the first gear ratio, the number of gear meshes in torque flow is four, because second planetary gearset PG2 and third planetary gearset PG3 work for power transfer, and each of them has two places in torque flow where torque is transmitted between gears turning in mesh with each other.

The second gear ratio is obtained by simultaneous application of fourth clutch C4, first brake B1 and second brake B2, as shown in FIG. 2. As shown in FIG. 3, in the second gear ratio, the number of gear meshes in torque flow is six, because all of first planetary gearset PG1, second planetary gearset PG2, and third planetary gearset PG3 work for power transfer, and each of them has two places in torque flow where torque is transmitted between gears turning in mesh with each other.

The third gear ratio is obtained by simultaneous application of first clutch C1, fourth clutch C4 and first brake B1, as shown in FIG. 2. As shown in FIG. 3, in the third gear ratio, the number of gear meshes in torque flow is four, because second planetary gearset PG2 and third planetary gearset PG3 work for power transfer, and each of them has two places in torque flow where torque is transmitted between gears turning in mesh with each other.

The fourth gear ratio is obtained by simultaneous application of third clutch C3, fourth clutch C4 and first brake B1, as shown in FIG. 2. As shown in FIG. 3, in the fourth gear ratio, the number of gear meshes in torque flow is four, because first planetary gearset PG1 and second planetary gearset PG2 work for power transfer, and each of them has two places in torque flow where torque is transmitted between gears turning in mesh with each other.

The fifth gear ratio is obtained by simultaneous application of second clutch C2, fourth clutch C4 and first brake B1, as shown in FIG. 2. As shown in FIG. 3, in the fifth gear ratio, the number of gear meshes in torque flow is four, because first planetary gearset PG1 and third planetary gearset PG3 work for power transfer, and each of them has two places in torque flow where torque is transmitted between gears turning in mesh with each other.

The sixth gear ratio is obtained by simultaneous application of second clutch C2, third clutch C3 and fourth clutch C4, as shown in FIG. 2. As shown in FIG. 3, in the sixth gear ratio, the number of gear meshes in torque flow is zero, because none of first planetary gearset PG1, second planetary gearset PG2, and third planetary gearset PG3 works for power transfer.

The seventh gear ratio is obtained by simultaneous application of second clutch C2, third clutch C3 and first brake B1, as shown in FIG. 2. As shown in FIG. 3, in the seventh gear ratio, the number of gear meshes in torque flow is six, because all of first planetary gearset PG1, second planetary gearset PG2, and third planetary gearset PG3 work for power transfer, and each of them has two places in torque flow where torque is transmitted between gears turning in mesh with each other.

The eighth gear ratio is obtained by simultaneous application of first clutch C1, second clutch C2 and first brake B1, as shown in FIG. 2. As shown in FIG. 3, in the eighth gear ratio, the number of gear meshes in torque flow is two, because only third planetary gearset PG3 works for power transfer, and has two places in torque flow where torque is transmitted between gears turning in mesh with each other.

The reverse gear ratio is obtained by simultaneous application of third clutch C3, first brake B1 and second brake B2, as shown in FIG. 2.

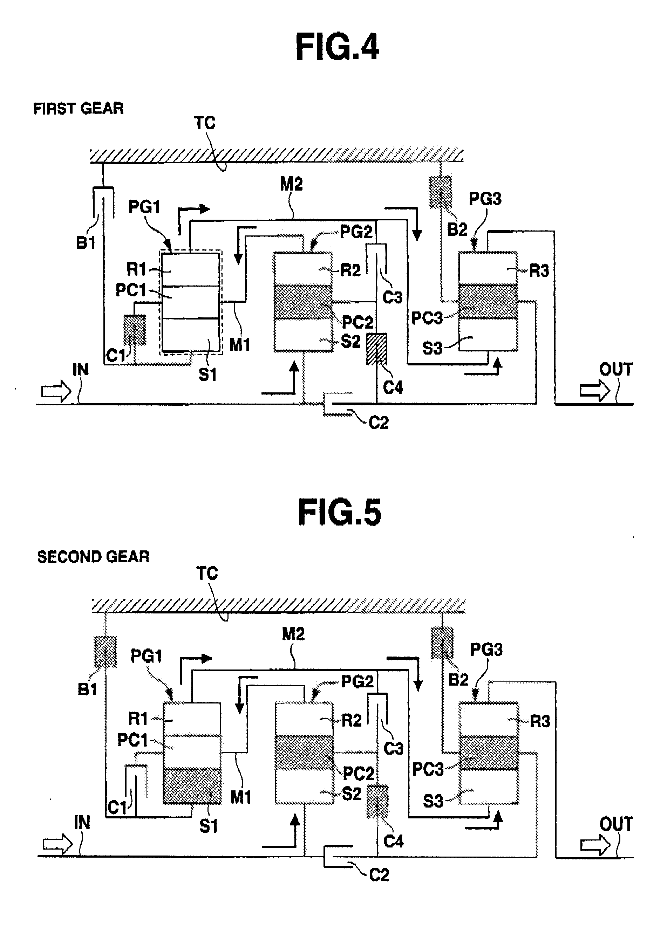

FIGS. 4 to 12 show how the eight forward gear ratios and one reverse gear ratio are obtained in the automatic transmission according to the first embodiment.

<First Gear Ratio> In the first gear ratio, first clutch C1, fourth clutch C4 and second brake B2 are simultaneously applied, as shown by hatching pattern in FIG. 4. With first clutch C1 applied, first sun gear S1, first planet-pinion carrier PC1 and first ring gear R1 are locked together, to rotate as a solid unit. With fourth clutch C4 and second brake B2 applied simultaneously, second planet-pinion carrier PC2 and third planet-pinion carrier PC3 are locked together, and held stationary with respect to transmission case TC. When second sun gear S2 is driven in the normal direction with input shaft IN, the rotation of second sun gear S2 causes second ring gear R2 to rotate in the reverse direction at a reduced speed in second planetary gearset PG2 where second planet-pinion carrier PC2 is held stationary. The rotation of second ring gear R2 drives first planet-pinion carrier PC1 through first rotor M1, causing the first ring gear R1 to rotate in the reverse direction at the same speed in first planetary gearset PG1 where first sun gear S1, first planet-pinion carrier PC1 and first ring gear R1 are locked together, to rotate as a solid unit. The rotation of first ring gear R1 drives third sun gear S3 through second rotor M2, causing the third ring gear R3 to rotate in the normal direction at a reduced speed in third planetary gearset PG3 where third planet-pinion carrier PC3 is held stationary. Finally, the rotation of third ring gear R3 drives output shaft OUT in the normal direction with a speed reduction of the first gear ratio with respect to the rotational speed of input shaft IN.

<Second Gear Ratio> In the second gear ratio, fourth clutch C4, first brake B1 and second brake B2 are simultaneously applied, as shown by hatching pattern in FIG. 5. Accordingly, first sun gear S1, second planet-pinion carrier PC2, and third planet-pinion carrier PC3 are held stationary with respect to transmission case TC. When second sun gear S2 is driven in the normal direction with input shaft IN, the rotation of second sun gear 52 causes second ring gear R2 to rotate in the reverse direction at a reduced speed in second planetary gearset PG2 where second planet-pinion carrier PC2 is held stationary. The rotation of second ring gear R2 drives first planet-pinion carrier PC1 through first rotor M1, causing the first ring gear R1 to rotate in the reverse direction at an increased speed in first planetary gearset PG1 where first sun gear S1 is held stationary. The rotation of first ring gear R1 drives third sun gear 53 through second rotor M2, causing the third ring gear R3 to rotate in the normal direction at a reduced speed in third planetary gearset PG3 where third planet-pinion carrier PC3 is held stationary. Finally, the rotation of third ring gear R3 drives output shaft OUT in the normal direction with a speed reduction of the second gear ratio with respect to the rotational speed of input shaft IN, where the rotation of output shaft OUT is faster than in the first gear ratio.

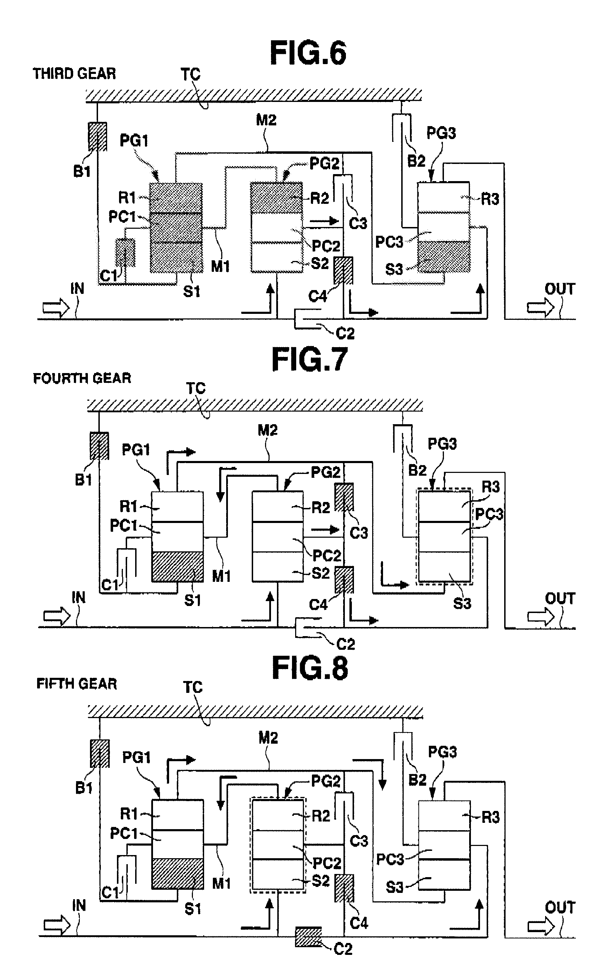

<Third Gear Ratio> In the third gear ratio, first clutch C1, fourth clutch C4 and first brake B1 are simultaneously applied, as shown by hatching pattern in FIG. 6. With first clutch C1 and first brake B1 simultaneously applied, first sun gear S1, first planet-pinion carrier PC1 and first ring gear R1 are locked together, and held stationary with respect to transmission case TC. Accordingly, second ring gear R2, and third sun gear S3, which are constantly coupled to first planet-pinion carrier PC1 and first ring gear R1 respectively through first rotor M1 and second rotor M2 respectively, are held stationary with respect to transmission case TC. With fourth clutch C4 applied, second planet-pinion carrier PC2 is coupled to third planet-pinion carrier PC3. When second sun gear S2 is driven in the normal direction with input shaft IN, the rotation of second sun gear S2 causes second planet-pinion carrier PC2 to rotate in the normal direction at a reduced speed in second planetary gearset PG2 where second ring gear R2 is held stationary. The rotation of second planet-pinion carrier PC2 drives third planet-pinion carrier PC3 through fourth clutch C4, causing the third ring gear R3 to rotate in the normal direction at an increased speed in third planetary gearset PG3 where third sun gear S3 is held stationary. Finally, the rotation of third ring gear R3 drives output shaft OUT in the normal direction with a speed reduction of the third gear ratio with respect to the rotational speed of input shaft IN, where the rotation of output shaft OUT is faster than in the second gear ratio.

<Fourth Gear Ratio> In the fourth gear ratio, third clutch C3, fourth clutch C4 and first brake B1 are simultaneously applied, as shown by hatching pattern in FIG. 7. With first brake B1 applied, first sun gear S1 is held stationary with respect to transmission case TC. With third clutch C3 and fourth clutch C4 simultaneously applied, third sun gear S3, third planet-pinion carrier PC3, third ring gear R3, and second planet-pinion carrier PC2 are locked together, to rotate as a solid unit at the output speed. Also, first ring gear R1, which is constantly coupled to third sun gear S3 through second rotor M2, rotates solidly with third planetary gearset PG3 at the output speed. When second sun gear S2 is driven in the normal direction with input shaft IN, second planet-pinion carrier PC2 and second ring gear R2 are caused to rotate under a constraint about rotation of first planet-pinion carrier PC1 and rotation of first ring gear R1, namely, under a condition that the rotational speed of second ring gear R2 is conformed to the rotational speed of first planet-pinion carrier PC1 through first rotor M1, and the rotational speed of second planet-pinion carrier PC2 is conformed to the rotational speed of first ring gear R1 through second rotor M2 and third clutch C3. Under this condition, second planet-pinion carrier PC2 rotates in the normal direction at a reduced speed (reduced from the input speed) in second planetary gearset PG2. Through third clutch C3, fourth clutch C4 and second rotor M2, the rotation of second planet-pinion carrier PC2 drives third sun gear 53, third planet-pinion carrier PC3 and third ring gear R3 as a solid unit in third planetary gearset PG3. Finally, the rotation of third ring gear R3 drives output shaft OUT in the normal direction with a speed reduction of the fourth gear ratio with respect to the rotational speed of input shaft IN, where the rotation of output shaft OUT is faster than in the third gear ratio.

<Fifth Gear Ratio> In the fifth gear ratio, second clutch C2, fourth clutch C4 and first brake B1 are simultaneously applied, as shown by hatching pattern in FIG. 8. With first brake B1 applied, first sun gear S1 is held stationary with respect to transmission case TC. With second clutch C2 and fourth clutch C4 simultaneously applied, second sun gear S2, second planet-pinion carrier PC2, second ring gear R2 and third planet-pinion carrier PC3 are locked together, to rotate as a solid unit at the input speed. When second sun gear S2 is driven in the normal direction with input shaft IN, the rotation of second ring gear R2 drives first planet-pinion carrier PC1 in the normal direction at the input speed, causing the first ring gear R1 to rotate in the normal direction at an increased speed in first planetary gearset PG1 where first sun gear S1 is held stationary. The rotation of first ring gear R1 drives third sun gear S3 through second rotor M2. In this way, third planetary gearset PG3 provides a planetary function of two inputs and one output. Third ring gear R3 is caused to rotate in the normal direction at a speed which is determined by the rotational speed of third planet-pinion carrier PC3 (the input speed) and the rotational speed of third sun gear S3. Finally, the rotation of third ring gear R3 drives output shaft OUT in the normal direction with a speed reduction of the fifth gear ratio with respect to the rotational speed of input shaft IN, where the rotation of output shaft OUT is faster than in the fourth gear ratio.

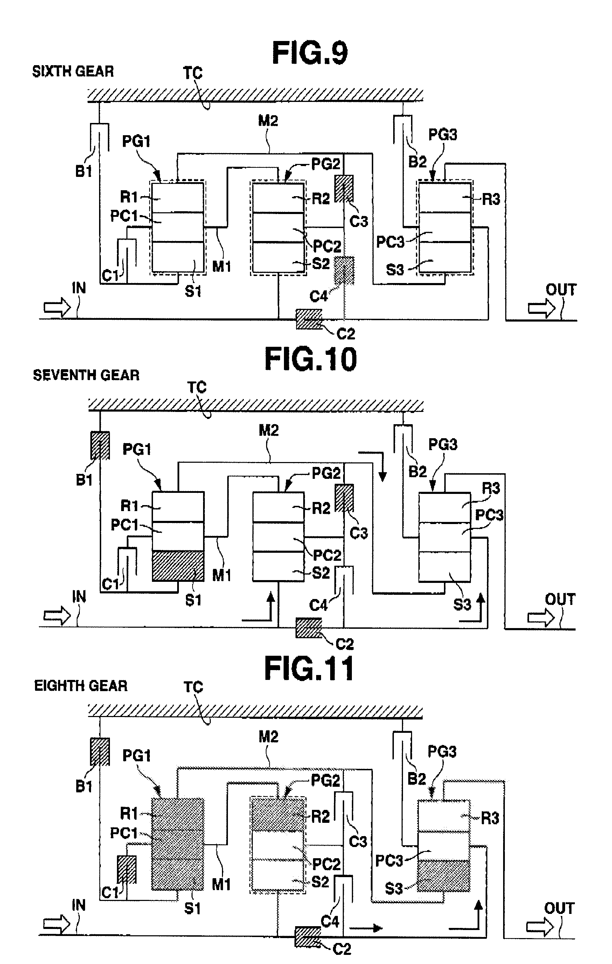

<Sixth Gear Ratio> In the sixth gear ratio, second clutch C2, third clutch C3 and fourth clutch C4 are simultaneously applied, as shown by hatching pattern in FIG. 9. Accordingly, all of the members of first planetary gearset PG1, second planetary gearset PG2, and third planetary gearset PG3 are locked together, to rotate as a solid unit at the input speed. The rotational speed of output shaft OUT is equal to that of input shaft IN, where the sixth gear ratio is equal to one (direct drive gear ratio).

<Seventh Gear Ratio> In the seventh gear ratio, second clutch C2, third clutch C3 and first brake B1 are simultaneously applied, as shown by hatching pattern in FIG. 10. With second clutch C2 applied, third planet-pinion carrier PC3 is coupled to second sun gear S2, to rotate at the input speed. With third clutch C3 applied, first ring gear R1, second planet-pinion carrier PC2, and third sun gear S3 rotate as a solid unit. With first brake B1 applied, first sun gear S1 is held stationary with respect to transmission case TC. When second sun gear S2 is driven in the normal direction with input shaft IN, second planet-pinion carrier PC2 and second ring gear R2 are caused to rotate under a constraint about rotation of first planet-pinion carrier PC1 and rotation of first ring gear R1, namely, under a condition that the rotational speed of second ring gear R2 is conformed to the rotational speed of first planet-pinion carrier PC1 through first rotor M1, and the rotational speed of second planet-pinion carrier PC2 is conformed to the rotational speed of first ring gear R1 through second rotor M2 and third clutch C3. Under this condition, second ring gear R2 is caused to rotate in the normal direction at a reduced speed (reduced from the input speed). The rotation of second planet-pinion carrier PC2 drives third sun gear S3 through third clutch C3 and second rotor M2. On the other hand, the rotation of second sun gear S2 or the input rotation drives third planet-pinion carrier PC3 through input shaft IN and second clutch C2. In this way, third planetary gearset PG3 provides a planetary function of two inputs and one output. Third ring gear R3 is caused to rotate in the normal direction at a speed which is determined by the rotational speed of third planet-pinion carrier PC3 (the input speed) and the rotational speed of third sun gear S3. Finally, the rotation of third ring gear R3 drives output shaft OUT in the normal direction with a speed increase of the seventh gear ratio with respect to the rotational speed of input shaft IN.

<Eighth Gear Ratio> In the eighth gear ratio, first clutch C1, second clutch C2 and first brake B1 are simultaneously applied, as shown by hatching pattern in FIG. 11. With first clutch C1 and first brake B1 simultaneously applied, first sun gear S1, first planet-pinion carrier PC1 and first ring gear R1 are locked together, and held stationary with respect to transmission case TC. Accordingly, second ring gear R2, and third sun gear S3, which are constantly coupled to first planet-pinion carrier PC1 and first ring gear R1 respectively through first rotor M1 and second rotor M2 respectively, are held stationary with respect to transmission case TC. With second clutch C2 applied, third planet-pinion carrier PC3 is coupled to input shaft IN. When third planet-pinion carrier PC3 is driven in the normal direction with input shaft IN, the rotation of third planet-pinion carrier PC3 causes third ring gear R3 to rotate in the normal direction at an increased speed in third planetary gearset PG3 where third sun gear S3 is held stationary. Finally, the rotation of third ring gear R3 drives output shaft OUT in the normal direction with a speed increase of the eighth gear ratio with respect to the rotational speed of input shaft IN, where the rotation of output shaft OUT is faster than in the seventh gear ratio. On the other hand, second sun gear S2 and second planet-pinion carrier PC2 rotate in second planetary gearset PG2 without transmitting torque. In this way, second planetary gearset PG2 and third planetary gearset PG3 do not actively work for power transfer in the eighth gear ratio.

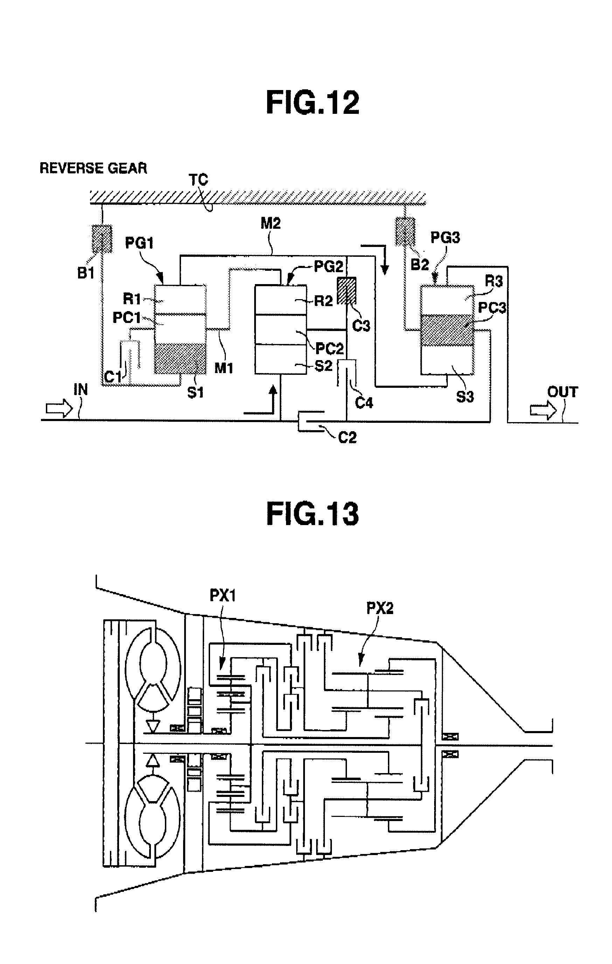

<Reverse Gear Ratio> In the reverse gear ratio, third clutch C3, first brake B1 and second brake B2 are simultaneously applied, as shown by hatching pattern in FIG. 12. With third clutch C3 applied, first ring gear R1, second planet-pinion carrier PC2, and third sun gear S3 rotate as a solid unit. With first brake B1 applied, first sun gear S1 is held stationary with respect to transmission case TC. With second brake B2 applied, third planet-pinion carrier PC3 is held stationary with respect to transmission case TC. When second sun gear 52 is driven in the normal direction with input shaft IN, second planet-pinion carrier PC2 and second ring gear R2 are caused to rotate under a constraint about rotation of first planet-pinion carrier PC1 and rotation of first ring gear R1, namely, under a condition that the rotational speed of second ring gear R2 is conformed to the rotational speed of first planet-pinion carrier PC1 through first rotor M1, and the rotational speed of second planet-pinion carrier PC2 is conformed to the rotational speed of first ring gear R1 through second rotor M2 and third clutch C3. Under this condition, second planet-pinion carrier PC2 rotates in the normal direction at a reduced speed (reduced from the input speed) in second planetary gearset PG2, The rotation of second planet-pinion carrier PC2 drives third sun gear S3 through third clutch C3 and second rotor M2, causing the third ring gear R3 to rotate in the reverse direction at a reduced speed in third planetary gearset PG3 where third planet-pinion carrier PC3 is held stationary. Finally, the rotation of third ring gear R3 drives output shaft OUT in the reverse direction with a speed reduction of the reverse gear ratio with respect to the rotational speed of input shaft IN.

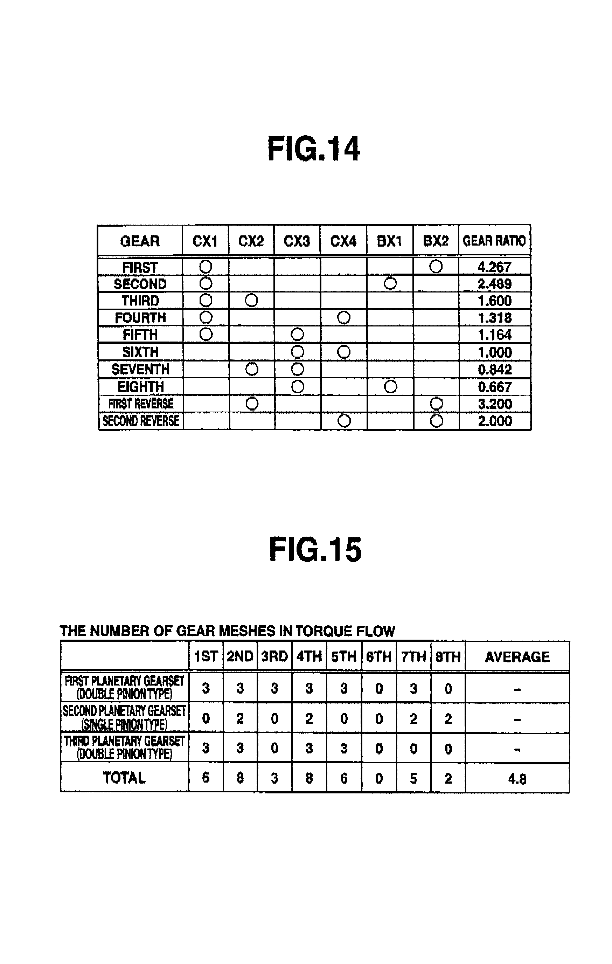

<Advantageous Effects in Comparison with Reference Example> The following describes advantageous effects produced by the automatic transmission according to the first embodiment as compared to a reference example. FIG. 13 shows an automatic transmission according to a reference example as disclosed in Japanese Patent Application Publication No. 2001-182785. FIG. 14 shows which two of six coupling members are selectively applied to obtain respective ones of eight forward gear ratios and two reverse gear ratios in the automatic transmission shown in FIG. 13. FIG. 15 shows the number of gear meshes in torque flow in each forward gear ratio in the automatic transmission shown in FIG. 13.

The automatic transmission according to the reference example can be regarded as having three planetary gearsets, as described below. The automatic transmission according to the first embodiment and the automatic transmission according to the reference example have the following three common features: (1) The transmission includes three planetary gearsets and six coupling members for providing eight forward gear ratios and one reverse gear ratio; (2) Every gearshift between two adjacent gears is implemented by a single clutch changeover operation, namely, by a single combination of application of one coupling member and release of another coupling member; and (3) The ratio of the reverse gear ratio to the first gear ratio is higher than 0.7, so that an adequate driving torque is provided in the reverse gear ratio. However, the automatic transmission according to the first embodiment is advantageous at least in the following points as compared to the automatic transmission according to the reference example.

<A. Three Planetary Gearsets> The automatic transmission according to the reference example includes a double-pinion planetary gearset PX1, and a Ravigneaux planetary gearset PX2. The Ravigneaux planetary gearset has two sun gears; two sets, one longer than the other, of planet pinions supported in one planet-pinion carrier; and a single ring gear. The Ravigneaux planetary gearset can be regarded as having a double-pinion planetary gearset and a single-pinion planetary gearset. In summary, the automatic transmission according to the reference example is regarded as having two double-pinion planetary gearsets and one single-pinion planetary gearset. This structure can cause at least the following three adverse effects: (1) The number of gear meshes in torque flow is large, adversely affecting the gear efficiency and gear noise level; (2) The diameters of planet pinions are small, adversely affecting the durability and reliability of the planet pinions; and (3) The automatic transmission is composed of a large number of parts, adversely affecting the manufacturing cost.

In contrast, the automatic transmission according to the first embodiment has first planetary gearset PG1, second planetary gearset PG2, and third planetary gearset PG3, which are single-pinion planetary gearsets. This feature is advantageous at least in the following three points (i) to (iii).

(i) The number of gear meshes in torque flow is smaller, so that the gear efficiency is higher, and gear noise level is lower, as compared to cases where an automatic transmission is constituted by a double-pinion planetary gearset. A double-pinion planetary gearset has three places in torque flow where torque is transmitted between gears turning in mesh with each other, whereas a single-pinion planetary gearset has two places in torque flow where torque is transmitted between gears turning in mesh with each other, with no pair of planet pinion gears turning in mesh with each other. In the automatic transmission according to the first embodiment, the average number of gear meshes in torque flow is equal to 3.75, as shown in FIG. 3. In contrast, in the automatic transmission according to the reference example, the average number of gear meshes in torque flow is equal to 4.8, because of presence of two double-pinion planetary gearsets. In this way, the automatic transmission according to the first embodiment achieves a reduction of 1.05 in the average number of gear meshes in torque flow.

(ii) The diameter of planet pinion gears is larger, so that the durability and reliability of the planet pinion gears is higher. In a single-pinion planetary gearset, a set of planet pinion gears are arranged between a sun gear and a ring gear, where the diameter of each planet pinion gear is set equal to about the spacing between the sun gear and the ring gear. In contrast, in a double-pinion planetary gearset, the diameter of each planet pinion gear must be set smaller than the spacing between the sun gear and the ring gear. In this way, in a single-pinion planetary gearset, the diameter of each planet pinion gear is larger, so that the rigidity of the planet pinion gear and the strength of the tooth flanks of the planet pinion gear can be enhanced, and the durability and reliability can be therefore enhanced.

(iii) The smaller number of parts leads to a reduced manufacturing cost. For example, if four planet pinion sets are needed, a double-pinion planetary gearset has four sets of double pinion gears, namely, eight planet pinion gears. In contrast, a single-pinion planetary gearset has four sets of single pinion gears, namely, four planet pinion gears. In this way, the automatic transmission according to the first embodiment achieves a reduction of four in the number of planet pinion gears, for example, and thereby a reduction in the manufacturing cost.

<B. Friction Loss in Each Gear Ratio> In the automatic transmission according to the reference example, each gear ratio is obtained by simultaneous application of two of the six coupling members, as shown in FIG. 14. Accordingly, in this automatic transmission, four of the coupling members are released constantly, in each of which a pair of engaging elements are rotating relative to each other. For example, in the first gear ratio, second clutch CX2, third clutch CX3, fourth clutch CX4, and first brake BX1 are released, in each of which a pair of engaging elements are rotating with respect to each other, Relative rotation between the engaging elements in each released coupling member can cause a friction loss due to drag, and thereby adversely affect the power transfer efficiency. If the automatic transmission according to the reference example is applied to an engine vehicle, the friction loss in the four coupling members can cause a decrease in the fuel efficiency of the vehicle. In contrast, in the automatic transmission according to the first embodiment, each gear ratio is obtained by simultaneous application of three of the six coupling members. Accordingly, in the automatic transmission according to the first embodiment, three of the coupling members are released constantly, in each of which a pair of engaging elements are rotating relative to each other. For example, in the first gear ratio, second clutch C2, third clutch C3 and first brake B1 are released, in each of which a pair of engaging elements are rotating with respect to each other. In this way, the automatic transmission according to the first embodiment achieves a reduction in the number of coupling members released, and thereby a reduction in the friction loss, and an increase in the power transfer efficiency. If applied to an engine vehicle, the automatic transmission according to the first embodiment enhances the fuel efficiency of the vehicle.

<C. Gear Ratio Range> The gear ratio range of an automatic transmission is represented by an indicator called overall gear ratio coverage which is a ratio of the highest gear ratio (the lowest-speed gear ratio) to the lowest gear ratio (the highest-speed gear ratio). The overall gear ratio coverage RC is desired to be high in general, so as to achieve flexible gear ratio settings. The automatic transmission according to the reference example provides an overall gear ratio coverage RC of 6.397 (=4.267/0.667), as shown in FIG. 14. In contrast, the automatic transmission according to the first embodiment provides an overall gear ratio coverage RC of 6.797 (=5.023/0.739), while maintaining preferable intervals between two adjacent gear ratios, where the sun-to-ring gear ratio of first planetary gearset PG1, ρ1, is equal to 0.587, the sun-to-ring gear ratio of second planetary gearset PG2, p2, is equal to 0.564, and the sun-to-ring gear ratio of third planetary gearset PG3, p3, is equal to 0.353. This enhances both of the starting performance in the lowest-speed gear ratio and the fuel efficiency at high speed in the highest-speed gear ratio. Incidentally, it is preferable that when the ratios between two adjacent gear ratios are plotted and connected by lines in a graph, the graph shows a gradual and smooth decrease, and then a flat extension, when followed from the low gear side to the high gear side. The output speed of the automatic transmission is adjusted with a final gear ratio by the final gear which is disposed on the downstream side of the automatic transmission, and then outputted to the driving wheels. Therefore, as the overall gear ratio coverage RC increases, the flexibility of adjustment by the final gear increases. For example, with the final gear ratio adjusted to be high (or low-geared), the automatic transmission can be suitably adapted to a hybrid vehicle with no torque converter. The automatic transmission can be also suitably adapted to gasoline engines and diesel engines in which the range for providing the optimum fuel efficiency is different from the range for providing the maximum torque.

<D. Compactness and Lightness> In cases where an automatic transmission is mounted on a motor vehicle, the automatic transmission is mounted in a limited engine room together with an engine. Accordingly, a compact and light automatic transmission is preferable in view of mountability to vehicle, and fuel efficiency. In the automatic transmission according to the reference example, two coupling members as well as an input shaft pass through the central hole of the sun gear of the Ravigneaux planetary gearset, as shown in FIG. 13. Accordingly, the inside diameter of the sun gear needs to be large enough for the two coupling members and input shaft. This leads to an increase in the outside diameter of the ring gear, namely, an increase in the outside diameter of the Ravigneaux planetary gearset, for setting a suitable sun-to-ring gear ratio based on the size of the sun gear. This results in a large unit size (in radial directions) of the automatic transmission. In contrast, in the automatic transmission according to the first embodiment: only input shaft IN passes through the central hole of second sun gear 52; only one coupling member as well as input shaft IN passes through the central hole of first sun gear S1; and only one coupling member as well as input shaft IN passes through the central hole of third sun gear S3, as shown in FIG. 1. Accordingly, the inside diameters of first sun gear S1, second sun gear S2 and third sun gear S3 can be set smaller, as compared to the reference example. This allows to reduce the outside diameters of first ring gear R1, second ring gear R2 and third ring gear R3 (the outside diameters of first planetary gearset PG1, second planetary gearset PG2 and third planetary gearset PG3) which are determined to set a suitable sun-to-ring gear ratio, and thereby allows to reduce the unit size (in radial directions) of the automatic transmission. Namely, the automatic transmission can be thus formed compact and light.

The following summarizes the features of the automatic transmission according to the first embodiment, and the advantageous effects produced by the features.

<A1> An automatic transmission comprises: a first planetary gearset (PG1) including: a first sun gear (S1); a first ring gear (R1); and a first planet-pinion carrier (PC1) arranged to carry a first planet pinion (P1) in mesh with the first sun gear (S1) and the first ring gear (R1); a second planetary gearset (PG2) including: a second sun gear (S2); a second ring gear (R2), wherein the second ring gear (R2) is constantly coupled to the first planet-pinion carrier (PC1) so as to constitute a first rotor unit (first rotor M1, second ring gear R2, first planet-pinion carrier PC1); and a second planet-pinion carrier (PC2) arranged to carry a second planet pinion (P2) in mesh with the second sun gear (S2) and the second ring gear (R2); a third planetary gearset (PG3) including: a third sun gear (S3), wherein the third sun gear (S3) is constantly coupled to the first ring gear (R1) so as to constitute a second rotor unit (second rotor M2, third sun gear S3, first ring gear R1); a third ring gear (R3); and a third planet-pinion carrier (PC3) arranged to carry a third planet pinion (P3) in mesh with the third sun gear (S3) and the third ring gear (R3); an input shaft (IN) constantly coupled to the second sun gear (S2); an output shaft (OUT) constantly coupled to the third ring gear (R3); a first coupling member (first clutch C1) arranged to be selectively applied to couple two of the first sun gear (S1), first ring gear (R1), and first planet-pinion carrier (PC1) to one another; a second coupling member (second clutch C2) arranged to be selectively applied to couple the second sun gear (S2) to the third planet-pinion carrier (PC3); a third coupling member (third clutch C3) arranged to be selectively applied to couple the second planet-pinion carrier (PC2) to the second rotor unit (M2, S3, R1); a fourth coupling member (fourth clutch C4) arranged to be selectively applied to couple the second planet-pinion carrier (PC2) to the third planet-pinion carrier (PC3); a fifth coupling member (first brake B1) arranged to be selectively applied to hold the first sun gear (S1) stationary; and a sixth coupling member (second brake B2) arranged to be selectively applied to hold the third planet-pinion carrier (PC3) stationary, wherein at least first to eighth gear ratios and one reverse gear ratio are obtained between the input shaft (IN) and the output shaft (OUT) by simultaneous application of three of the first to sixth coupling members (C1, C2, C3, C4, B1, B2). This feature is advantageous in the gear efficiency, gear noise level, durability and reliability, and manufacturing cost, and effective for enhancing the power transfer efficiency while suppressing the friction loss. This feature further makes it possible to reduce the unit size (in radial directions) of the automatic transmission.

<A2> In the automatic transmission: the first gear ratio is obtained by simultaneous application of the first, fourth and sixth coupling members (first clutch C1, fourth clutch C4, second brake B2); the second gear ratio is obtained by simultaneous application of the fourth, fifth and sixth coupling members (fourth clutch C4, first brake B1, second brake B2); the third gear ratio is obtained by simultaneous application of the first, fourth and fifth coupling members (first clutch C1, fourth clutch C4, first brake B1); the fourth gear ratio is obtained by simultaneous application of the third, fourth and fifth coupling members (third clutch C3, fourth clutch C4, first brake B1); the fifth gear ratio is obtained by simultaneous application of the second, fourth and fifth coupling members (second clutch C2, fourth clutch C4, first brake B1); the sixth gear ratio is obtained by simultaneous application of the second, third and fourth coupling members (second clutch C2, third clutch C3, fourth clutch C4); the seventh gear ratio is obtained by simultaneous application of the second, third and fifth coupling members (second clutch C2, third clutch C3, first brake B1); and the eighth gear ratio is obtained by simultaneous application of the first, second and fifth coupling members (first clutch C1, second clutch C2, first brake B1). This feature is advantageous, because each shifting operation between two adjacent gears is simply implemented by a single combination of application of one coupling member and release of another coupling member. This also provides a larger overall gear ratio coverage RC, while maintaining preferable intervals between two adjacent gear ratios, and thereby enhances both of the starting performance in the lowest-speed gear ratio and the fuel efficiency at high speed in the highest-speed gear ratio.

<A3> In the automatic transmission, the reverse gear ratio is obtained by simultaneous application of the third, fifth and sixth coupling members (third clutch C3, first brake B1, second brake B2). This feature makes it possible to set the ratio of the reverse gear ratio to the first gear ratio close to one so that an adequate driving torque is provided in the reverse gear ratio, while maintaining a preferable overall gear ratio coverage RC and preferable intervals between two adjacent gear ratios.

<Second Embodiment> The automatic transmission according to the second embodiment differs from the first embodiment in that first clutch C1 is selectively applied to couple first sun gear S1 to first ring gear R1.

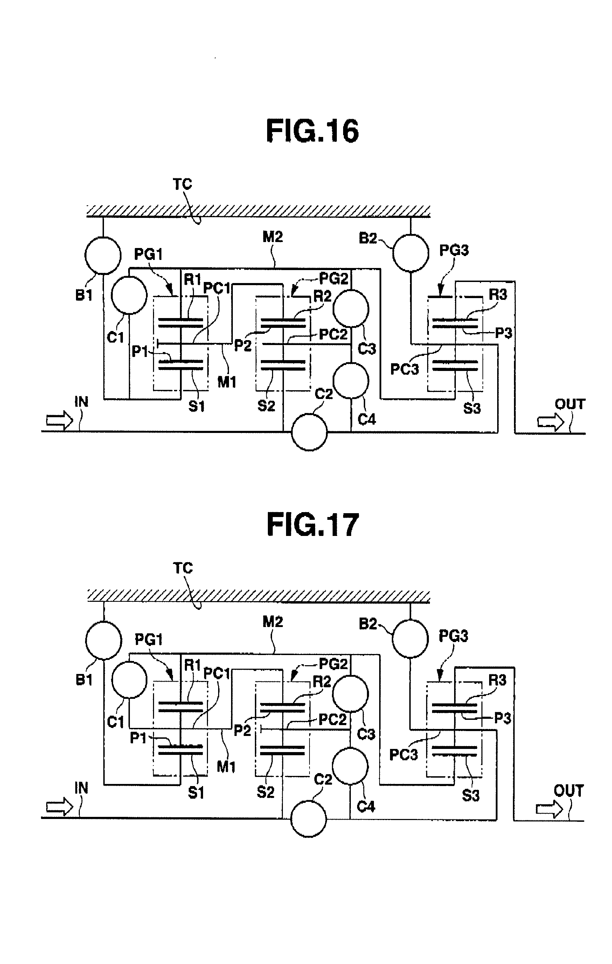

FIG. 16 shows an automatic transmission according to the second embodiment. As shown in FIG. 16, the automatic transmission includes a first planetary gearset PG1, a second planetary gearset PG2, a third planetary gearset PG3, an input shaft "IN", an output shaft "OUT", a first rotor M1, a second rotor M2, a first clutch C1 as a first coupling member or friction member, a second clutch C2 as a second coupling member or friction member, a third clutch C3 as a third coupling member or friction member, a fourth clutch C4 as a fourth coupling member or friction member, a first brake B1 as a fifth coupling member or friction member, a second brake B2 as a sixth coupling member or friction member, and a transmission case "TC".

In contrast to first clutch C1 according to the first embodiment that is arranged to be selectively applied to couple first sun gear S1 to first planet-pinion carrier PC1 as shown in FIG. 1, the first clutch C1 according to the second embodiment is arranged to be selectively applied to couple first sun gear S1 to first ring gear R1, namely, hold first sun gear S1 with respect to first ring gear R1, as shown in FIG. 16. First clutch C1 according to the second embodiment is a coupling member arranged to be selectively applied to couple two of the first sun gear, first ring gear, and first planet-pinion carrier of first planetary gearset PG1 to one another, as in the first embodiment. With first brake B1 released and first clutch C1 applied in the first gear ratio, all the members of first planetary gearset PG1 are interlocked together to rotate as a solid unit. With first brake B1 and first clutch C1 simultaneously applied in the third gear ratio or eighth gear ratio, all the members of first planetary gearset PG1 are held stationary with respect to transmission case TC.

The automatic transmission according to the second embodiment is constructed similar to the first embodiment except first clutch C1, and produces advantageous effects as in the first embodiment.

<Third Embodiment> The automatic transmission according to the third embodiment differs from the first embodiment in that first clutch C1 is selectively applied to couple first planet-pinion carrier PC1 to first ring gear R1.

FIG. 17 shows an automatic transmission according to the third embodiment. As shown in FIG. 17, the automatic transmission includes a first planetary gearset PG1, a second planetary gearset PG2, a third planetary gearset PG3, an input shaft "IN", an output shaft "OUT", a first rotor M1, a second rotor M2, a first clutch C1 as a first coupling member or friction member, a second clutch C2 as a second coupling member or friction member, a third clutch C3 as a third coupling member or friction member, a fourth clutch C4 as a fourth coupling member or friction member, a first brake B1 as a fifth coupling member or friction member, a second brake B2 as a sixth coupling member or friction member, and a transmission case "TC".

In contrast to first clutch C1 according to the first embodiment that is arranged to be selectively applied to couple first sun gear S1 to first planet-pinion carrier PC1 as shown in FIG. 1, and first clutch C1 according to the second embodiment that is arranged to be selectively applied to couple first sun gear S1 to first ring gear R1 as shown in FIG. 16, the first clutch C1 according to the third embodiment is arranged to be selectively applied to couple first planet-pinion carrier PC1 to first ring gear R1, namely, hold first planet-pinion carrier PC1 with respect to first ring gear R1, as shown in FIG. 17. First clutch C1 according to the third embodiment is a coupling member arranged to be selectively applied to couple two of the first sun gear, first ring gear, and first planet-pinion carrier of first planetary gearset PG1 to one another, as in the first and second embodiments. With first brake B1 released and first clutch C1 applied in the first gear ratio, all the members of first planetary gearset PG1 are interlocked together to rotate as a solid unit. With first brake B1 and first clutch C1 simultaneously applied in the third gear ratio or eighth gear ratio, all the members of first planetary gearset PG1 are held stationary with respect to transmission case TC.

The automatic transmission according to the third embodiment is constructed similar to the first embodiment except first clutch C1, and produces advantageous effects as in the first embodiment.

<Modifications> In the present embodiments, the sun-to-ring gear ratio of first planetary gearset PG1, ρ1, is equal to 0.587, the sun-to-ring gear ratio of second planetary gearset PG2, p2, is equal to 0.564, and the sun-to-ring gear ratio of third planetary gearset PG3, p3, is equal to 0.353. Each sun-to-ring gear ratio may be changed within a structurally possible range, with which the overall gear ratio coverage RC can be set high and the ratios between gear ratios can be suitably set.

The present automatic transmissions may be adapted to forward engine forward drive vehicles, hybrid vehicles, electric vehicles, fuel cell vehicles, etc., as well as front engine rear drive vehicles to which the present automatic transmissions are adapted.

The entire contents of Japanese Patent Application 2009-178803 filed July 31, 2009 are incorporated herein by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. An automatic transmission comprising:
a first planetary gearset (PG1) including:
a first sun gear (S1);
a first ring gear (R1); and
a first planet-pinion carrier (PC1) arranged to carry a first planet pinion (P1) in mesh with the first sun gear (S1) and the first ring gear (R1);
a second planetary gearset (PG2) including:
a second sun gear (S2);
a second ring gear (R2), wherein the second ring gear (R2) is constantly coupled to the first planet-pinion carrier (PC1) so as to constitute a first rotor unit (M1, R2, PC1); and
a second planet-pinion carrier (PC2) arranged to carry a second planet pinion (P2) in mesh with the second sun gear (S2) and the second ring gear (R2);
a third planetary gearset (PG3) including:
a third sun gear (S3), wherein the third sun gear (S3) is constantly coupled to the first ring gear (R1) so as to constitute a second rotor unit (M2, S3, R1);
a third ring gear (R3); and
a third planet-pinion carrier (PC3) arranged to carry a third planet pinion (P3) in mesh with the third sun gear (S3) and the third ring gear (R3);
an input shaft (IN) constantly coupled to the second sun gear (52);
an output shaft (OUT) constantly coupled to the third ring gear (R3);
a first coupling member (C1) arranged to be selectively applied to couple two of the first sun gear (S1), first ring gear (R1), and first planet-pinion carrier (PC1) to one another;
a second coupling member (C2) arranged to be selectively applied to couple the second sun gear (S2) to the third planet-pinion carrier (PC3);
a third coupling member (C3) arranged to be selectively applied to couple the second planet-pinion carrier (PC2) to the second rotor unit (M2, S3, R1);
a fourth coupling member (C4) arranged to be selectively applied to couple the second planet-pinion carrier (PC2) to the third planet-pinion carrier (PC3);
a fifth coupling member (B1) arranged to be selectively applied to hold the first sun gear (S1) stationary; and
a sixth coupling member (B2) arranged to be selectively applied to hold the third planet-pinion carrier (PC3) stationary, wherein at least first to eighth forward gear ratios and one reverse gear ratio are obtained between the input shaft (IN) and the output shaft (OUT) by simultaneous application of three of the first to sixth coupling members (C1, C2, C3, C4, B1, B2).

2. The automatic transmission as claimed in Claim 1, wherein:
the first forward gear ratio is obtained by simultaneous application of the first, fourth and sixth coupling members (C1, C4, B2);
the second forward gear ratio is obtained by simultaneous application of the fourth, fifth and sixth coupling members (C4, B1, B2);
the third forward gear ratio is obtained by simultaneous application of the first, fourth and fifth coupling members (C1, C4, B1);
the fourth forward gear ratio is obtained by simultaneous application of the third, fourth and fifth coupling members (C3, C4, B1);
the fifth forward gear ratio is obtained by simultaneous application of the second, fourth and fifth coupling members (C2, C4, B1);
the sixth forward gear ratio is obtained by simultaneous application of the second, third and fourth coupling members (C2, C3, C4);
the seventh forward gear ratio is obtained by simultaneous application of the second, third and fifth coupling members (C2, C3, B1); and
the eighth forward gear ratio is obtained by simultaneous application of the first, second and fifth coupling members (C1, C2, B1).

3. The automatic transmission as claimed in Claim 1 or 2, wherein the reverse gear ratio is obtained by simultaneous application of the third, fifth and sixth coupling members (C3, B1, B2).
